Europäisches Patentamt

European Patent Office

Office européen des brevets

(11) Publication number: **0 342 770 B1**

# EUROPEAN PATENT SPECIFICATION

(45) Date of publication of patent specification: **18.05.94**   (51) Int. Cl.⁵: **G01B** **7/00**, G01B 7/28

(21) Application number: **89201828.4**

(22) Date of filing: **26.02.87**

(60) Publication number of the earlier application in accordance with Art.76 EPC: **0 240 151**

(54) **Metrological apparatus.**

(30) Priority: **04.03.86 GB 8605324**

(43) Date of publication of application:
**23.11.89 Bulletin 89/47**

(45) Publication of the grant of the patent:
**18.05.94 Bulletin 94/20**

(84) Designated Contracting States:
**CH DE GB IT LI SE**

(56) References cited:
| | |
|---|---|
| **EP-A- 0 132 947** | **DE-A- 2 654 839** |
| **FR-A- 2 518 253** | **GB-A- 2 172 707** |
| **US-A- 3 727 119** | **US-A- 3 741 659** |
| **US-A- 4 166 323** | **US-A- 4 677 755** |

(73) Proprietor: **RANK TAYLOR HOBSON LIMITED**
**2 New Star Road**
**Leicester LE4 7JO(GB)**

(72) Inventor: **Lane, Hugh Roger**
**9 School Lane**
**South Croxton Leicester LE7 8RT(GB)**
Inventor: **Onyon, Peter Dean**
**20 Beacon Road**
**Loughborough LE11 2BO(GB)**

(74) Representative: **Beresford, Keith Denis Lewis et al**
**BERESFORD & Co.**
**2-5 Warwick Court**
**High Holborn**
**London WC1R 5DJ (GB)**

EP 0 342 770 B1

## Description

This invention relates to metrological apparatus, especially for measuring form, such as roundness and straightness, or errors therein, comprising a workpiece support, a sensor for sensing the surface of a workpiece on said support, a plurality of drive means for effecting relative movement between a workpiece on said support and said sensor so that said sensor traverses the surface of the workpiece, and computer means for controlling said drive means for the performance of a measuring operation and for deriving metrological data during said measuring operation.

Such an apparatus is disclosed in German Patent DE-A-2654839. In this apparatus, a central processor unit controls the drive means through a drive element control device of unspecified type and the outputs of position detectors are fed to further computers whose ouputs are then fed to the central processor. Similarly, outputs from the sensor are fed to analysing circuits which in turn output data to the central processor. Thus, with this architecture, the central processor appears to be burdened continuously and simultaneously with many detailed control and interpretive tasks.

Another form of computer architecture in a measuring apparatus is disclosed in EP-A-132947. In this, a central processor outputs control instructions direct to a microprocessor control board which controls X and Y stepping motors directly and thus, again, it appears that the central processor is continously busy with detailed control tasks.

The object of the present invention is to provide an improved computer architecture in a metrological apparatus as above defined.

The metrological apparatus of the present invention is characterised in that the computer means comprises a host computer having data input means for the input of instructions for performing a required measuring operation, and being arranged to perform calculations on data obtained with the aid of said sensor, a master computer arranged for receiving from said host computer instructions defining a metrological operation to be performed, and a plurality of slave computers arranged for controlling respective different ones of said drive means, said master computer being arranged for sending to said slave computers instructions, dependent upon the metrological operation to be performed, to control said drive means for the performance of said operation.

Thus, in effect, the computer architecture according to the invention has the computers arranged in three levels, with each level performing the different tasks set out in the preceding paragraph.

The invention is described further by way of example with reference to the accompanying drawings in which:

Figure 1 is a perspective view of metrological apparatus provided with a computer system having an architecture according to an embodiment of the invention;

Figure 2 is a perspective view showing part of the apparatus of Figure 1 in more detail;

Figure 3 is an elevation in the direction of arrow III of Figure 2;

Figure 4 is an elevation in the direction of arrow IV of Figure 2;

Figure 5 is a block diagram illustrating the computer system incorporated in the apparatus of Figure 1;

Figure 6 is a diagram of a cam for illustrating a preferred function which may be carried out by the apparatus of Figures 1 to 5; and

Figures 7, 8 and 9 are diagrams illustrating methods of measuring flatness, cylindricity and conicity utilising the apparatus of Figures 1 to 5.

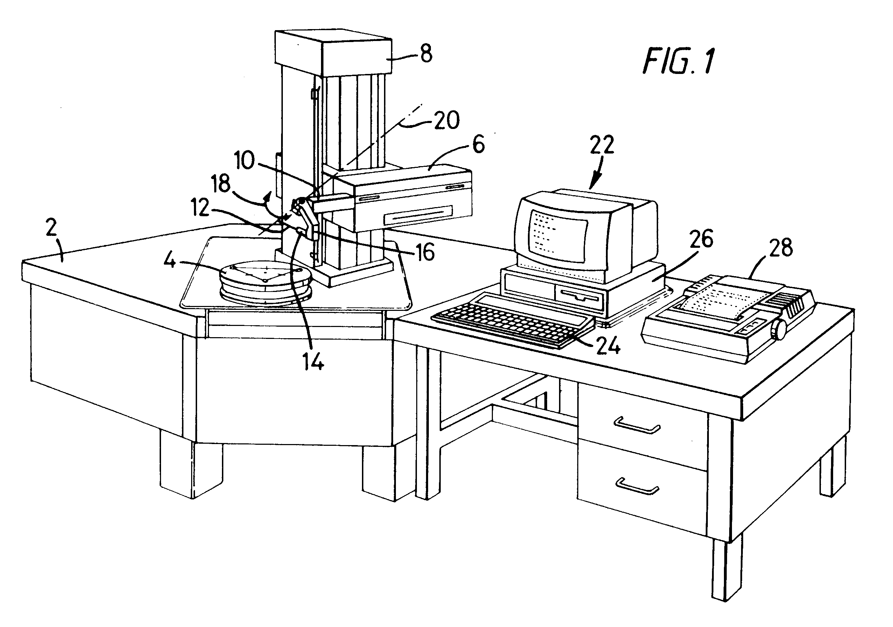

With reference to Figure 1, metrological apparatus comprises a bench 2 provided with a turntable 4 for supporting a workpiece (not shown). A carriage 6 is supported for vertical movement on a column 8 and carries a horizontally movable arm 10. A stylus 12 for engaging the surface of the workpiece is comprised in a linear transducer 14, which may be inductive or capacitative for example, which is carried on one end of an arm 16 whose other end is attached to the free end of the arm 10 for pivotal movement, in the direction shown by arrow 18, about an axis 20 which is at 45° to the horizontal.

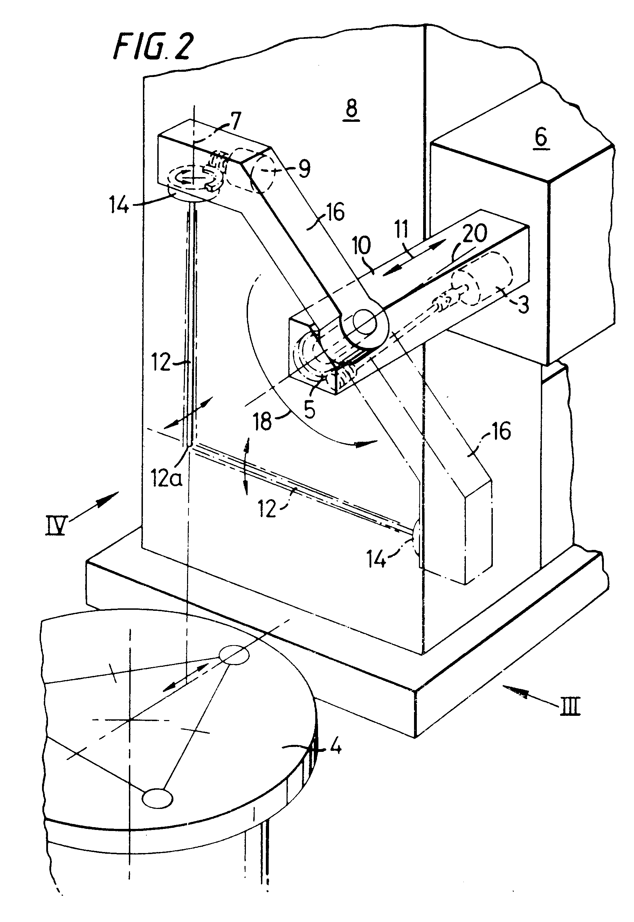

As best seen in Figure 2, the arm 16 is pivotable through 180° about the axis 20 between the end positions shown in Figure 2 in full and chain dotted lines respectively. In the full line position, the stylus 12 is vertical and in the broken line position the stylus 12 is horizontal. The arrangement is such that the tip of the stylus 12a is located in substantially the same position in a radial plane of the turntable 4 when the arm 16 is in either of the two positions shown in Figure 2. An electric motor 3 mounted in the arm 10 is coupled to the arm 16 through a worm and wheel transmission 5 for driving the arm 16 between its two end positions. The stylus 12 and transducer 14 are arranged so that the stylus 12 can be deflected relative to the transducer 14 in only one direction. However, the transducer 14 is mounted in the arm 16 for rotation about an axis 7, preferably through 270° in 30° steps. Thus, for example, if the transducer 14 is rotated about axis 7 through 90° this changes by 90° the plane within which the stylus 12 is deflectable. A motor 9 is mounted in the arm for effecting rotation of the transducer 14. When the arm 16 is in the full line position shown in Figure 2 with the stylus 12 vertical, for example for sensing an internal surface of a workpiece placed on the turntable 4, the transducer 14 will generally be maintained in a position in which the stylus 12 is deflectable in a radial plane relative to the turntable 4. However, when the arm 16 is in the broken line position shown in Figure 2 with the stylus 12 horizontal, the transducer 14 may be rotated either to the position in which the stylus 12 is deflectable in a horizontal plane or to a position in which the stylus 12 is deflectable in a vertical plane. In the former position, a side surface of a workpiece may conveniently be sensed and in the latter position an upwardly facing surface may conveniently be sensed. Surfaces facing in other directions may be sensed by rotating the transducer 14 about axis 7 to a position in which the stylus 12 is deflectable in a plane generally normal to the surface to be sensed.

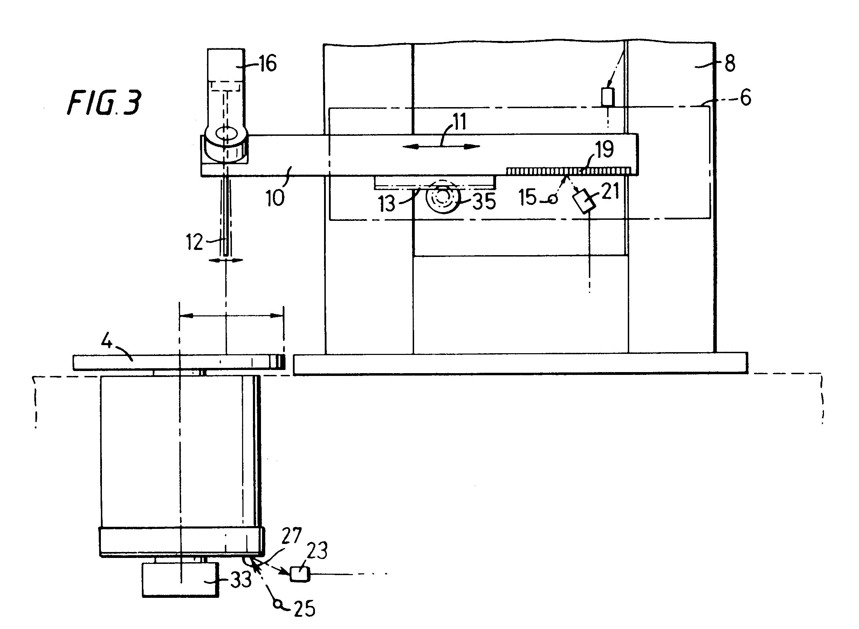

As seen in Figure 3, a motor 35 is provided in the carriage 6 for driving the arm 10 in the horizontal direction indicated by arrow 11, drive being transmitted from the motor 35 to the arm 11 through a rack and pinion arrangement 13 or other suitable means such as a ball screw. Movement of the arm 10 in the direction of arrow 11 causes the transducer 14 to be moved horizontally so that the tip 12a of the stylus 12 is moved radially inwardly or outwardly relative to the axis of the turntable 4, the tip 12a remaining in the radial plane throughout this movement. Light from a source 15 mounted in the carriage 6 is directed towards a linear optical grating 19 carried by the arm 11 and reflected therefrom to a phototransducer 21 which provides output signals, preferably quadrature signals, from which the position and velocity of the arm 11 can be derived. As also seen in Figure 3, a further phototransducer 23 provides signals from which the position and rotational velocity of the turntable 4, which is driven by a motor 33, can be derived with the aid of a light source 25 and optical grating 27 movable with the turntable 4.

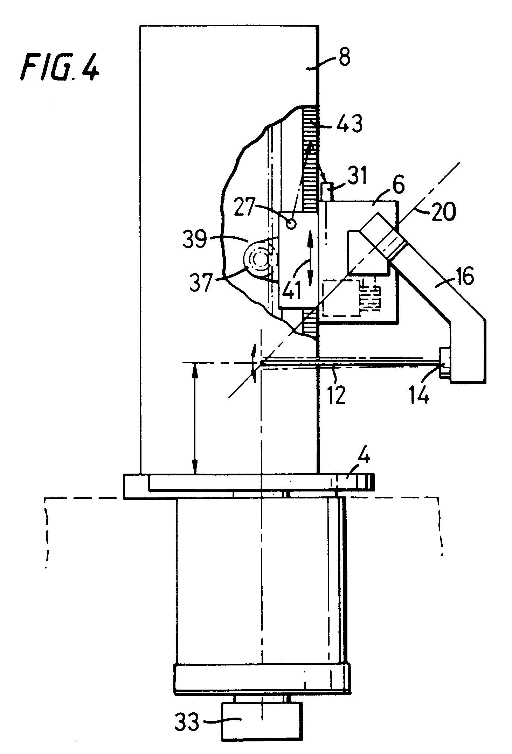

As seen in Figure 4, a motor 37 carried by the carriage 6 cooperates with a rack and pinion arrangement 39 (or other suitable means such as a sprocket wheel and chain) for driving the carriage 6 vertically in the direction of arrow 41. A constant force spring (not shown) is provided for counterbalancing this movement. A further optical grating 43 mounted in the column 8 reflects light from a source 27 carried by the carriage 6 to a phototransducer 31 also carried by the carriage 6 so that the transducer 31 may provide signals, preferably quadrature signals, from which the position and speed of movement of the carriage 6 may be derived.

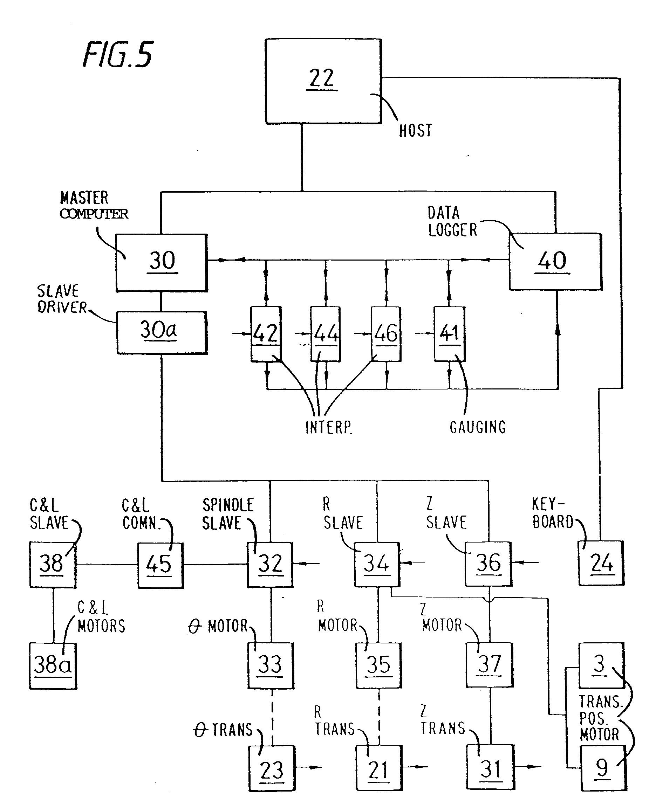

As seen in Figures 1 and 5 a host computer 22, which is provided with a keyboard 24, disc drive 26 and printer 28, is located on the bench 2 and is used for controlling the metrological apparatus, processing the measurements obtained and outputting the required metrological data. The host computer may, for example, be an IBM compatible PC.

As shown in Figure 5, the apparatus includes a number of microprocessors 30, 32, 34, 36, 38 and 40. Microprocessor 30 is used as a master computer and receives instructions from the host 22 as to the operations which are to be performed by the apparatus. Such instructions are stored by the master computer 30 which, in accordance with programs stored in memory associated with the master computer, instructs and controls the remaining microprocessors, via a slave driver processor 30a, as to the action to be taken in order to carry out the instructions supplied by the host 22. Each of the remaining microprocessors also has memory associated with it storing the routines necessary for the performance of the instructions received from the master computer 30. Thus, microprocessors 32, 34, 36 and 38 are designated as slaves.

Slave 32 controls the speed of rotation of the turntable 4. Slave 34 controls radial movement of the arm 10. Slave 36 controls vertical movement of the carriage 6. Slaves 32, 34 and 36 all preferably control the speeds of the respective motors 33, 35 and 37 Slave 38 receives instructions from communication network 45 and controls centring and levelling motors 38a wherein the turntable 4 is displaced horizontally and/or pivotally for centring and levelling of a workpiece prior to performing measurements. The arrangements for centring and levelling are preferably in accordance with the disclosure of our patent application being filed simultaneously herewith and claiming priority from European Patent Application EP-A-240150 in which the inventors are Anthony Bruce Barnaby and Michael Walter Mills.

Microprocessor 40 receives data from gauging circuit 41 which receives and digitizes the signal output by the transducer 14 and from each of three interpolators 42, 44 and 46, which respectively receive signals from photoelectric transducers 23, 21 and 31 that detect the rotary movement of the turntable 4, the radial (horizontal) movement of the arm 10 and the vertical movement of the carriage 6 respectively. The interpolators function to provide data representing the precise positions of the turntable 4, arm 10 and carriage 6 to a resolution to a small fraction of the pitch of the optical gratings 27, 19 and 43. In the preferred embodiment, the interpolators provide resolution of the position of the transducer 14 in the radial (horizontal) direction to about 200 nanometres and in the axial (vertical) direction to about 500 nanometres and the rotational position of the workpiece can be resolved to about 3 arc seconds. The invention is not restricted to any specific resolution but it is preferred that resolution in the radial and vertical directions should be better than 1 micron and the rotational resolution should be better than 100 arc seconds, preferably better than 10 arc seconds. As already indicated, the transducer 14 preferably provides an output signal which resolves the position of the tip 12a of the stylus 12 to better than 20 nanometres, preferably 12 nanometres. Thus, high resolution data as to the deflection of the stylus 12 and the disposition of the transducer 14 in the radial (R) and vertical (Z) directions and the precise rotational position (O) of the turntable 4 is continually supplied to the microprocessor 40 during a measuring operation. This data is logged and stored by the microprocessor 40 and supplied to the host 22 for the performance of the required calculations of this data in accordance with programs stored in memory associated with the host 22.

Accordingly, and by way of summary, the architecture shown in Figure 5 is such that the computers are arranged in three levels. The host 22 represents a firt level and permits the input of instructions from an operator, the transfer of appropriate instructions to the master computer, and the reception of data from the data logger 40. The host 22 performs calculations on that data in order to provide the required information. The second level is represented by the master computer 30 which, upon receipt of instructions from the host 22, transmits, in accordance with programs stored in memory associated with the master computer 30, appropriate instructions to the various slaves, via the slave driver 30a as necessary to perform the operation instructed by the host. The slaves 32, 34, 36 and 38, and the data logger 40, represent the third level and carry out, in accordance with programs stored in memory associated with them respectively, the detailed functions necessary to perform the operations instructed by the master computer on the instructions of the host 22. Preferably the master computer is arranged so that successive instructions received from the host 22 may be stored simultaneously in different portions of the associated memory so that these instructions may be acted upon in turn by the master computer 30.

It has already been mentioned that the transducer 14 is a linear transducer. Thus, the signal which it outputs is representative of the degree of deflection of the stylus 12. However, as also already indicated, transducers providing the required high degree of resolution, for example resolution to better than 20 nanometres suffer from the problem that their range of operation i.e. the range of movement of the tip 12a of the stylus 12 within which a linear output signal with the required resolution is provided, is highly limited. Specifically, transducers with a suitable resolution may have a range of no more than 0.4 mm. To overcome this problem in accordance with an important preferred aspect of the invention, the master computer 30, upon receiving information that the signal from the gauging circuit 41 has exceeded a predetermined threshold, transmits an instruction to slave 34 to activate the motor 35 whereby the arm 11 is displaced until the signal output by the gauging circuit 14 is returned to a predetermined value, defined as a null value (which may, for example, be zero). Such instruction is sent when the transducer 14 is in a position in which the stylus 12 is deflectable in a radial plane with the arm 16 in either of the positions shown in Figure 2. If the arm 16 is in the broken line position shown in Figure 2, with the stylus 12 horizontal, and if the transducer 14 is rotated to the position in which the stylus is deflectable in a vertical plane (i.e. parallel to the axis of the turntable 4) the master computer 30 sends an instruction to the slave 36 to activate the motor 37 when the output from the gauging circuit 14 exceeds the predetermined threshold. Further, the master computer 30 is arranged so that, in appropriate circumstances, activation of the motor 33 for rotating the turntable may be effected under control of signals from the transducer 14 such that when the signal therefrom exceeds a predetermined threshold the motor 33 is actuated so that the workpiece is moved as necessary to permit the transducer 14 to follow the surface of the workpiece as it moves in the horizontal and/or vertical direction. Thus, in all of these cases, the stylus 12 is caused to follow the surface of the workpiece during rotation of the workpiece on the turntable 4. As a result high resolution measurements can be obtained while nevertheless accommodating large features of form since when such large features are encountered by the stylus the arm 10 or carriage 6 is moved as appropriate so that the tip of the stylus follows the workpiece surface without the stylus being deflected beyond its range of operation. The host computer 22 obtains the metrological information required, for example as to form or errors in form, both from the signals derived from the transducer 14 and the signals derived from the phototransducers 23, 21, 31 and the associated interpolators 42, 44 and 46.

Alternatively or in addition, the speed at which the stylus traverses the workpiece surface may be varied, by varying the speed of the motors driving the turntable 4 and/or the arm 10 and/or the carriage 6, so as to enable the gathering of data in a preferred manner for example to provide constant surface bandwidth whereby the results of measuring identical surface features at different radii are also identical and dependent only on the surface speed selected. In particular, it is preferred that data be taken at points on the surface of the workpiece at fixed distances apart and accordingly, with the arrangement under description, this may be achieved regardless of, for example, different curvatures of different portions of the surface, without varying the data collection rate by varying one or more of the speeds mentioned in order to compensate for the difference in curvatures, for example. In order to accomplish this, the master computer 30 reads positional data from the interpolators 42, 44 and 46 and the gauging circuit 41, the speed of the appropriate motors being varied in accordance with this received data and with programs stored in memory associated with the master computer 30.

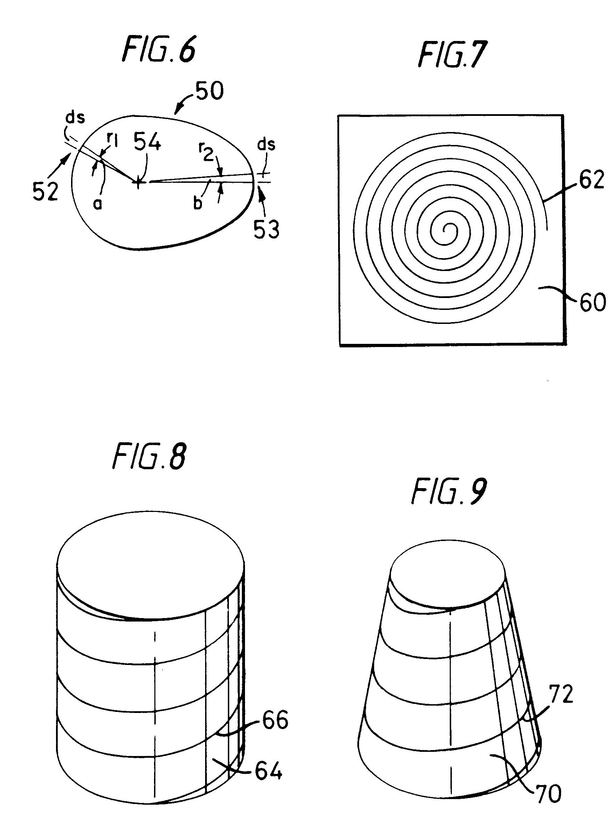

As an example of the foregoing, Figure 6 illustrates a cam 50 whose profile is to be measured by taking measurements at positions spaced apart by a distance ds. At portion 52 of the cam where distance ds is at a radius r1 from the centre of rotation 54 and subtends at angle a, the speed of rotation of the turntable 4, in order to enable collection of data at a constant rate, will have to differ from that utilised when measuring portion 53 of the cam, where ds is at a radius r2 and subtends an angle b. Thus, the master computer has associated with it programs for varying the speed of rotation of the turntable 4 taking these parameters into account in order that data may be collected at a constant rate at constant incremental positions of the stylus on the surface being measured. To achieve this, the speed of rotation of the turntable may be controlled in accordance with the following equation:

$$\frac{d\theta}{dt} = \frac{1}{R}\sqrt{V^2 - \left(\frac{dS}{dt} + \frac{dR}{dt}\right)^2}$$

where V is the required constant speed of traverse of the transducer over the workpiece surface, S is the signal from the linear output transducer 14 and R is the signal derived by the interpolator 44 from the transducer 21 indicating the radial position of the transducer 14.

With reference to Figure 7, a preferred operation for the measurement of flatness is illustrated. In Figure 7, a surface 60 of a workpiece (not shown) placed upon the turntable 4 is traversed by the stylus 12 in a spiral path 62. This is achieved by causing the arm 10 to be moved radially inwardly or outwardly accordingly to whether the measurement is started near the centre or near the periphery of the surface 60, whilst rotating the turntable 4. In one preferred mode of operation, the speed of rotation of the turntable is varied, as a linear function of the distance of the stylus from the centre of rotation, in order that the linear speed of traverse of the stylus over the surface is maintained constant. Data from the stylus 12 is logged at fixed time or distance intervals. Other modes of operation are possible in which, for example, the speed of rotation is kept constant.

With reference to Figure 8, cylindricity of a surface 64 is measured by causing the stylus 12 to traverse a spiral (helical) path 66. This is achieved, after centring and levelling, by rotation of the turntable 4 whilst moving the carriage 6 vertically. In this measurement, the speeds of movement are maintained constant and again data is logged at fixed time intervals, these fixed intervals again resulting in the logging of data at fixed incremental distances along the path of movement of a stylus over the surface. Measurements are taken over a number of revolutions around the surface 64 i.e. the helix or spiral has multiple turn. It may be noted that the stylus may be caused to traverse a spiral or helical path over the cylindrical surface 64 for the purpose of determining the axis of the cylinder.

In the example of Figure 9, conicity of a surface 70 is measured by causing the stylus 12 to traverse a spiral path 72 having several turns. This is achieved, after centring and levelling, by rotating the turntable 4 whilst moving the carriage 6 vertically and the arm 10 radially (horizontally). The radial movement is inwards if the stylus moves from a relatively wide portion to a relatively narrow portions of the surface 70 and vice versa . The radial movement of the arm 10 is controlled in dependence upon the magnitude of the signal output by the transducer 14 so that the stylus 12 is maintained in continuous contact with the conical surface 70 as the measurement progresses. Further, the angular velocity of the turntable 4 can be controlled as a linear function of the radial position of the arm 10 as indicated by transducer 44 so that the linear speed at which the stylus traverses the surface 70 is maintained constant. Data is logged at constant time intervals.

Although certain preferred methods of measurement have described, it should be understood that the machine may be programmed for carrying out a wide variety of measurements, such as surface roughness, roundness, straightness, flatness, squareness, taper, coaxiality, parallelism, size of regular and irregular shapes.

Where, in the preferred embodiment, the transducer position and/or the speeds of one or more of the motors are varied either in sequence or simultaneously so that the transducer follows the profile being measured and/or so that measurements may be taken at constant surface intervals measurements may be performed more rapidly and efficiently than in prior art apparatus.

## Claims

1. Metrological apparatus comprising a workpiece support (4), a sensor (12,14) for sensing the surface of a workpiece on said support (4), a plurality of drive means (33,35,37) for effecting relative movement between a workpiece on said support (4) and said sensor (12,14) so that said sensor (12,14) traverses the surface of the workpiece, and computer means (22,30,32,34,36) for controlling said drive means (33,35,37) for the performance of a measuring operation and for deriving metrological data during said measuring operation, characterised in that said computer means comprises a host computer (22) having data input means (24) for the input of instructions for performing a required measuring operation, and being arranged to perform calculations on data obtained with the aid of said sensor (12,14), a master computer (30) arranged for receiving from said host computer (22) instructions defining a metrological operation to be performed, and a plurality of slave computers (32,34,36) arranged for controlling respective different ones of said drive means (33,35,37), said master computer (30) being arranged for sending to said slave computers (32,34,36) instructions, dependent upon the metrological operation to be performed, to control said drive means for the performance of said operation.

2. Apparatus according to claim 1, characterised by an additional computer (40) for logging data obtained during said metrological operation and for transmitting said logged data to said host computer (22).

3. Apparatus according to claim 1 or 2, characterised in that said master computer (30) also receives information from the sensor (12, 14) and as to the position of the sensor (12,14).

## Patentansprüche

1. Meßtechnisches Gerät mit einem Werkstückhalter (4), einem Fühler (12, 14) zum Abtasten der Oberfläche eines auf dem Halter (4) befindlichen Werkstücks, mehreren Antriebseinrichtungen (33, 35, 37) zur Ausführung einer Relativbewegung zwischen einem auf dem Halter (4) befindlichen Werkstück und dem Fühler (12, 14) derart, daß der Fühler (12, 14) die Werkstückoberfläche überquert, und einer Computereinrichtung (22, 30, 32, 34, 36) zur Steuerung der Antriebseinrichtungen (33, 35, 37) zur Durchführung eines Meßvorgangs und Ableitung von meßtechnischen Daten während des Meßvorgangs, dadurch **gekennzeichnet**, daß die Computereinrichtung einen Host-Computer (22), der eine Dateneingabeeinrichtung (24) zur Eingabe von Befehlen für die Durchführung eines erforderlichen Meßvorgangs aufweist und so ausgelegt ist, daß er Berechnungen an mit Hilfe des Fühlers (12, 14) gewonnenen Daten durchführt, einen Master-Computer (30), der so ausgelegt ist, daß er von dem Host-Computer (22) Befehle empfängt, die einen durchzuführenden meßtechnischen Vorgang definieren, sowie mehrere Slave-Computer (32, 34, 36) umfaßt, die zur Steuerung jeweils unterschiedlicher Antriebseinrichtungen (33, 35, 37) ausgelegt sind, wobei der Master-Computer (30) so ausgelegt ist, daß er an die Slave-Computer (32, 34, 36) je nach dem durchzuführenden meßtechnischen Vorgang Befehle zur Steuerung der Antriebseinrichtungen für die Durchführung dieses Vorgangs sendet.

2. Gerät nach Anspruch 1, gekennzeichnet durch einen weiteren Computer (40) zum Protokollieren von während des meßtechnischen Vorgangs gewonnenen Daten und Übertragen der protokollierten Daten an den Host-Computer (22).

3. Gerät nach Anspruch 1 oder 2, dadurch gekennzeichnet, daß auch der Master-Computer (30) Informationen von dem Fühler (12, 14) sowie bezüglich dessen Lage empfängt.

## Revendications

1. Appareil métrologique comprenant un support de pièce d'oeuvre (4), un détecteur (12, 14) pour explorer la surface d'une pièce d'oeuvre sur le support (4), un certain nombre de moyens d'entraînement (33, 35, 37) pour produire un mouvement relatif entre une pièce d'oeuvre placée sur le support (4) et le détecteur (12, 14) de façon que ce détecteur (12, 14) traverse la surface de la pièce d'oeuvre, et des moyens d'ordinateurs (22, 30, 32, 34, 36) pour commander les moyens d'entraînement (33, 35, 37) de manière à effectuer une opération de mesure et à obtenir des données métrologiques pendant cette opération de mesure, caractérisé en ce que les moyens d'ordinateurs comprennent un ordinateur hôte (22) comportant des moyens d'entrée de données (24) pour l'entrée d'instructions destinées à effectuer une opération de mesure requise, et étant organisé pour effectuer des calculs sur les données obtenues au moyen du détecteur (12, 14), un ordinateur maître (30) organisé pour recevoir de l'ordinateur hôte (22) des instructions définissant une opération métrologique à effectuer, et un certain nombre d'ordinateurs esclaves (32, 34, 36) organisés pour commander les différents éléments respectifs des moyens d'entraînement (33, 35, 37), l'ordinateur maître (30) étant conçu pour envoyer, en fonction de l'opération métrologique à effectuer, des instructions aux ordinateurs esclaves (32, 34, 36), de manière à commander les moyens d'entraînement en vue de l'exécution de cette opération.

2. Appareil selon la revendication 1, caractérisé en ce qu'il comprend un ordinateur supplémentaire (40) pour noter les données obtenues pendant l'opération métrologique, et pour transmettre ces données notées à l'ordinateur hôte (22).

3. Appareil selon l'une des revendications 1 ou 2, caractérisé en ce que l'ordinateur maître (30) reçoit également une information du détecteur (12, 14) et une information relative à la position de ce détecteur (12, 14).

FIG.1

# FIG.2

FIG.3

EP 0 342 770 B1

FIG.4

# FIG.5

FIG.6

FIG.7

FIG.8

FIG.9